# EUROPEAN PATENT SPECIFICATION

(11) **EP 0 445 089 B1**
(45) Date of publication and mention of the grant of the patent: **15.03.1995**
(21) Application number: 91850008.3
(22) Date of filing: 16.01.1991
(51) Int. Cl.: F22B 1/30, A61H 33/06, G05D 9/12

(54) **Overboiling protection for a steam generator**
Ueberhitzungssicherung für einen Dampferzeuger
Dispositif de protection contre la surchauffe d'un générateur de vapeur

(30) Priority: 16.01.1990 SE 9000152
(43) Date of publication of application: 04.09.1991
(73) Proprietor: AB EL- SPIRALER, S-302 50 Halmstad (SE)
(72) Inventor: Nilsson, Hans, S-310 38 Simlangsdalen (SE)
(74) Representative: Wallin, Bo-Göran

(56) References cited:
- EP-A- 0 323 939
- EP-A- 0 333 357
- DE-A- 3 405 212
- DE-C- 3 711 891

## Description

The present invention refers to a method and device for controlling the steam production while preventing overboiling in a small steam generator comprising:
a heating device in the form of tubular heating elements in a water tank, which can be filled through an external refill tube, sensing means for detection of water level in the water tank between a maximum and a minimum level, control circuit, connected to said sensing means and heating elements.

### Technical problem

In a steam bath generator which is not connected to the water mains, the filling of water is carried out manually by means of a funnel and a tube into an inlet in a tank in which is provided heating elements. On said tube a water seal is provided which prevents steam from leaking out the back way through the refill funnel when steam is beginning to be produced. When the supplied electric power is increased to a certain level, the steam production will be so large that the steam pressure acts to press up water through the refill funnel with a flood of hot water as a result.

### State of the art

Through the German Offenlegungsschrift DE 3404892 is previously known a steam generator in a combination steam bath, apparatus consisting of a tank in which water is vaporized by means of the heating device. Water is supplied to the tank by way of a refill tube, the control valve and the containers. The water in the tank can be emptied out by way of the valve. To check the level in the tank there is provided a level indicator. In this document is said that the supply of fluid of the storage containers can be automatically controlled in dependence of the level indicator (33). The contents of DE 3404892 as to the rest gives no instruction of how to prevent overboiling in a steam generator of the type stated in the introduction.

In DE-C-3 711 891 a vapour deposition apparatus is disclosed. The apparatus comprises an electrically heated liquid tank. The liquid to be vaporized is poured directly into the tank through a sealable opening in the top portion of the tank. In the tank a number of level sensing means are provided in a vertical alignment on a bar. The sensing means generate a signal when the liquid levels are exceeded or have dropped below a predetermined figure. The heat generating is controlled with respect to this signals.

### Objects of the invention

A first object of the invention is to provide an overboiling protection for a steam bath generator which in itself is of a simplified construction, but has a high steam production in proportion to the boiling volume thereof. A second object is to provide an overboiling protection which is both reliable and cost effective.

### Technical solution

Above objects are obtained by the positioning of the upper surface of water column present in the refill tube, having a water seal tube is detected by means of a position detecting means, arranged in a refill means, connected to the refill tube, whereby the water seal tube is partially curved and is arranged lower than the inlet from the tube to the tank and slightly over the bottom of the tank such that it contains water stopping the steam flowing out through the refill tube and that the water level is detected when the water column lifted due to the steam pressure produced in the tank, reaches the said position detecting means, whereby the control circuit in response to detection of the upper surface of the water level in the refill tube disconnects the electric supply to said tubular heating elements such that the steam pressure decreases and after a certain time delay the supply to said element is reconnected, the disconnection and reconnection occurring in a periodical sequence.

### Description of drawings

In the accompanying drawings
Fig. 1A shows a longitudinal sectional view over a steam bath generator of simplified construction to which the present invention is applied, the section is taken along the line I-I in Fig 1 B;
Fig. 1B is a transversal sectional view over the steam bath generator which shows the refill funnel on which the sensor according to the present invention is provided. the section is taken along the line II-II in Fig. 1A;
Fig 2 is a wiring diagram over a control circuit for a steam generator according to the present invention.

### Description of a preferred embodiment

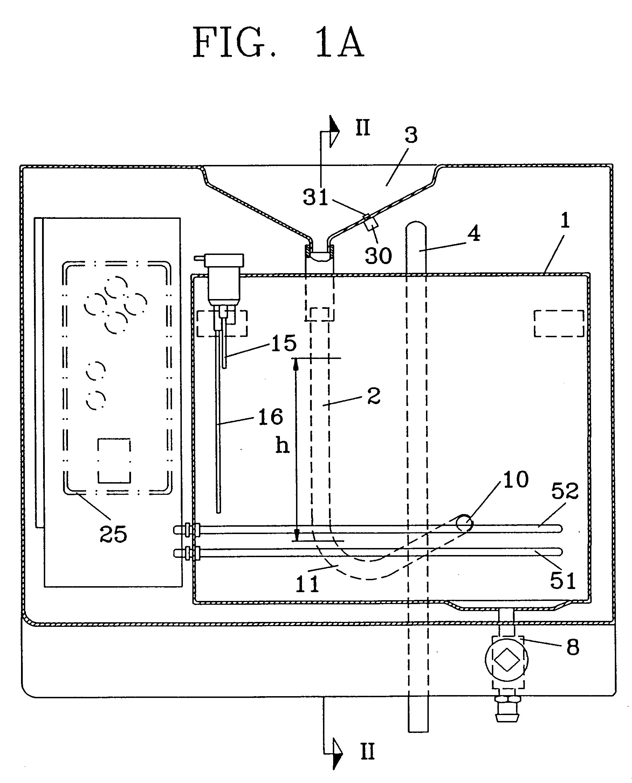

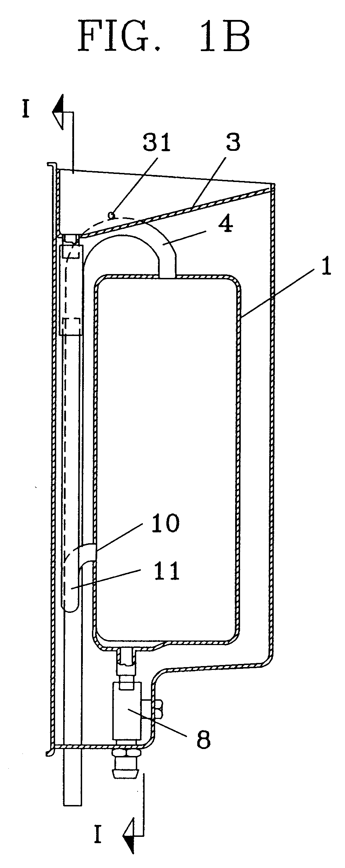

With reference to Fig. 1A and 1B the steam generator comprises a boiler tank 1 on one side of which is provided an inlet 10 for water which is to be vaporized. A refill tube 2 with a funnel 3 arranged at the side of the tank and provided with a water seal 11 the lowest level of which is at a height slightly over the bottom of the tank. The water seal 11 prevents steam to leak out the back way through the refill tuber 2.

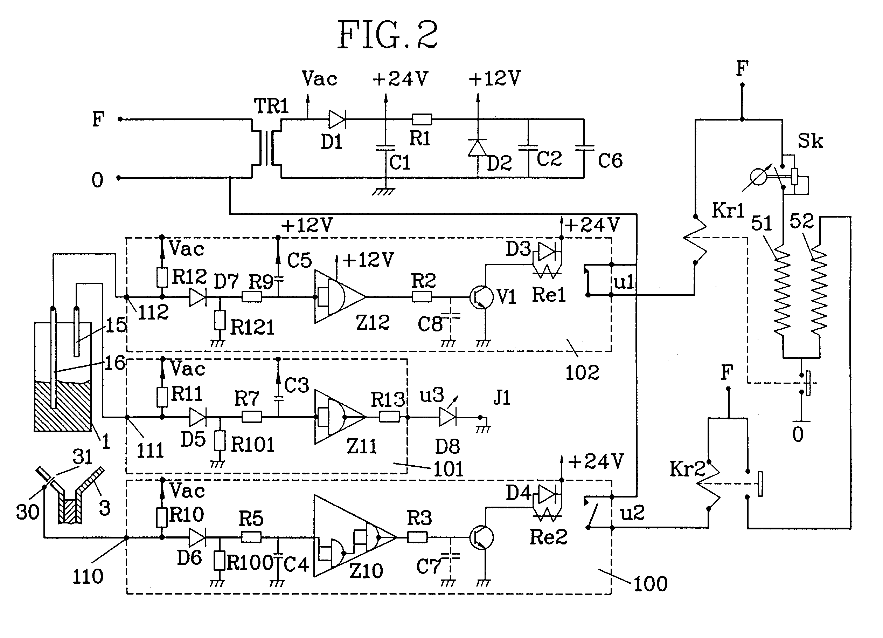

Through the steam pipe 4 vapour streams out with a pressure corresponding to the height h of the water column in the water seal. In the bottom of the tank 1 are provided tubular heating elements 51 and 52 for heating of the water which is going to be vaporized. The tubular heating elements 51 and 52 are fed from the mains which can be disconnected by means of the contactors Kr1 and Kr2 (see Fig. 2). Residual water in the tank 1 can be let out through the tap 8.

On the upper part of the tank are provided two level sensors 15 and 16 of which the sensor 15 gives an indication of maximum allowed water level, while the sensor 16 gives a minimum level for start of steam generation. By the setting of the control and detector unit 25 the steam generation can be made pulsating or continuous.

With reference to Fig. 1A is shown a section of the refill funnel 3 comprising the sensor 30 for protection against overboiling. In its simplest design the sensor consists of at least one electrically conducting pin or an electrode 31 of corrosion free material while the other electrode is constituted by the material of the tank 1.
The function of the sensor 30 is the following:
When the water in the tank starts boiling, the steam pressure will be so large that the water column in the refill tube 2 fills the funnel 3 and reaches the sensor 30 which changes its impedance value between earth and the electrode 31 from a very large (Gohm) to a low value (kohm). This impedance change is detected by a detector circuit, the output of which by way of a relay activates the contactor which breaks the current to the tubular heating element 52. By this the temperature of the water is lowered and the boiling decreases with a diminished steam pressure as a result. The water which is present in the funnel sinks off and the contactor after a time delay again connects the mains to the tube element 52.

Through the procedure described above the steam production can be kept to a maximum without overboiling.

The overboiling protection according to the present invention with the control function according to the above makes it possible to utilize higher electric power for steam generation than is possible with only a water seal.

With reference to fig. 2 is shown a complete wiring diagram of a control system for a steam generator to which the present invention is applied.
In the control system the detector circuits 100, 101 and 102 are included, which receive signals from the electrodes 30, 15 and 16 respectively.
The input 110 of the detector 100 is supplied with an alternating voltage Vac of e.g. 24 volts from the transformer TR 1 connected to the mains F, 0 and is rectified by the diode D6 and is filtered through the resistor R5 and capacitor C4 to a DC voltage on the input of the non - inverting buffer amplifier z11, which in the present embodiment of the invention is a part of a MOS integrated circuit.

At high impedance at the detector input, that is when the water in the refilling tube is not in contact with the electrode pin 31, the capacitor C4 is completely charged, which implies a high logic level at the input of z10 and activation of the relay Re2 resulting in a closure of the detector output u2 and connection of the element 52 to the mains.

At low impedance over the detector input 110, that is when the water has reached the electrode pin 31 the AC voltage coming to the detector circuit 100 is limited by voltage division by R10 to a low input value whereby the capacitor C4 is discharged over the resistors R5 and R100 with the time constant C4 * (R5 + R100) to a voltage level which is detected by the amplifier z10 as a logical zero which implies a low voltage level at the output of the buffer amplifier and by way of the transistor v2 a broken contact at the detector output u2 and a disconnection of the tube element from the mains.
The time constant C4 * (R5 + R100) is chosen such that an optimum steam production is provided.

When the water level in the tank 1 at refill has reached to a height at a level of the tip of the electrode 16, in the same way as in the case with the electrode 30, a low logical level is obtained at the input of the integrated circuit z12 which is an inverting buffer amplifier. At the output u1 of the detector circuit 102 a closed contact is obtained where by the contactor Kr1 gives a connection of the tube element 51 by way of a current rheostat which consists of an electrically heated bimetal controlled switch, which gives connection and disconnection of the tube element 51 to the mains in periodical intervals (pulse and pause) for continuous control of the output electric power.

At the water level corresponding to the height position of the tip of the electrode 15 in the similar way as above is obtained a low logical level at the input of the inverting buffer amplifier z11 and corresponding high logical level at the output u3, which lights the indicator lamp D8 which indicates maximum water level.

## Claims

1. Method of controlling the steam production while preventing overboiling in a small steam generator comprising:
a heating device in the form of tubular heating elements (51, 52) in a water tank (1), which can be filled through an external refill tube (2), sensing means (15, 16) for detection of water level in the water tank between a maximum and a minimum level,
control circuit (25), connected to said sensing means (15, 16) and heating elements (51, 52),
**characterized in that**,
the position of the upper surface of water column present in the refill tube (2), having a water seal tube (11), (2), is detected by means of a position detecting means (30), arranged in a refill means (3), connected to the refill tube (2), whereby the water seal tube (11) is partially curved and is arranged lower than the inlet (10) from the tube to the tank and slightly over the bottom of the tank such that it contains water stopping the steam flowing out through the refill tube and that the water level is detected when the water column lifted due to the steam pressure produced in the tank (1), reaches the said position detecting means (30), whereby the control circuit (25) in response to detection of the upper surface of the water level in the refill tube (2) disconnects the electric supply to said tubular heating elements (51, 52) such that the steam pressure decreases and after a certain time delay the supply to said element (51, 52) is reconnected, the disconnection and reconnection occurring in a periodical sequence.

2. Device to control the steam production while preventing overboiling in a small steam generator comprising:
a heating device in the form of tubular heating elements (51, 52) in a water tank (1), which can be filled through an external refill tube (2), sensing means (15, 16) for detection of water level in the water tank between a maximum and a minimum level,
control means (25), connected to said sensing means (15, 16) and heating elements (51, 52),
**characterized in that**
a position detecting means (30) is provided on a refill means (3), connected to the refill tube (2), which is arranged with a water seal tube (11), whereby the water seal tube (11) is partially curved and is arranged lower than the inlet (10) from the tube to the tank and slightly over the bottom of the tank such that it contains water stopping the steam flowing out through the refill tube and which position detecting means (30) detects the presence of water in said refill means (3), and signals to the control circuit (25) which is arranged to disconnect the electric supply to said tubular heating elements (51, 52) such that the steam pressure decreases and after a certain time delay to reconnect the supply to said elements (51, 52), the disconnection and reconnection occurring in a periodical sequence .

3. Device according to claim 2,
**characterized in that**
said sensing means (30) is connected to an input (110) of a detector circuit (100), which is provided with a contact closing output (u) connected to the drive coil of a contactor (Kr2) which in response to detecting a signal from said means (30) disconnects the connector means (F,0) from said tubular heating element (52) and means (R5,C4) in said detector circuit for delaying reconnection of the connector means (F,0) to said tubular heating element (52).

4. Device according to claim 3,
**characterized in that**
said means for detecting of water is an electrode (31) which is supplied with AC voltage (Vac) and the input (110) of the detector (100) measures the electric current in the water between the electrode (31) and a return path in the tank (1).

## Patentansprüche

1. Verfahren zum Steuern der Dampferzeugung, wobei eine Überhitzung in einem kleinen Dampferzeuger verhindert wird, umfassend:
eine Heizeinrichtung in der Form von rohrförmigen Heizelementen (51, 52) in einem Wasserbehälter (1), der durch ein äußeres Einfüllrohr (2) gefüllt werden kann, Meßfühlereinrichtungen (15, 16) zum Erfassen des Wasserpegels in dem Wasserbehälter zwischen einem maximalen und einem minimalen Pegel, eine Steuerschaltung (25), die mit den genannten Meßfühlereinrichtungen (15, 16) und den Heizelementen (51, 52) verbunden ist, **dadurch gekennzeichnet**, daß die Lage der oberen Oberfläche der Wassersäule, die in den Einfüllrohr (2) vorhanden ist, das ein Wasserabdichtungsrohr (11), (2) aufweist, mittels einer Lageerfassungseinrichtung (30) erfaßt wird, die in einer Einfülleinrichtung (3) vorgesehen ist, die mit dem Einfüllrohr (2) verbunden ist, wobei das Wasserabdichtungsrohr (11) teilweise gekrümmt ist und niederer als der Einlaß (10) von dem Rohr zu den Behälter und etwas oberhalb des Bodens des Behälters so angeordnet ist, daß es Wasser enthält, das den Dampf anhält, durch das Einfüllrohr auszuströmen, und daß der Wasserpegel erfaßt wird, denn die Wassersäule, die aufgrund des in den Behälter (1) erzeugten Dampfdrucks angehoben worden ist, die genannte Lageerfassungseinrichtung (30) erreicht, wodurch die Steuerschaltung (25) in Reaktion auf das Erfassen der oberen Oberfläche des Wasserpegels in dem Einfüllrohr (2) die elektrische Versorgung zu den genannten rohrförmigen Heizelementen (51, 52) so unterbricht, daß der Dampfdruck abnimmt und die Versorgung des genannten Elements (51, 52) nach einer gewissen Zeitverzögerung wiederverbunden wird, wobei die Unterbrechung und Wiederverbindung in einer periodischen Abfolge auftritt.

2. Einrichtung zur Steuerung der Dampferzeugung, wobei eine Überhitzung in einem kleinen Dampferzeuger verhindert wird, umfassend:
eine Heizeinrichtung in der Form von rohrförmigen Heizelementen (51, 52) in einem Wasserbehälter (1), der durch ein äußeres Einfüllrohr (2) gefüllt werden kann, Meßfühlereinrichtungen (15, 16) zum Erfassen des Wasserpegels in dem Wasserbehälter zwischen einem maximalen und einem minimalen Pegel, eine Steuerschaltung (25), die mit den genannten Meßfühlereinrichtungen (15, 16) und den Heizelementen (51, 52) verbunden ist, **dadurch gekennzeichnet**, daß eine Lageerfassungseinrichtung (30) an einer Einfülleinrichtung (3) vorgesehen ist, die mit dem Einfüllrohr (2) verbunden ist, das mit einem Wasserabdichtungsrohr (11) ausgebildet ist, wobei das Wasserabdichtungsrohr (11) teilweise gekrümmt ist und niederer als der Einlaß (10) von dem Rohr zu dem Behälter und etwas oberhalb des Bodens des Behälters so angeordnet ist, daß es Wasser enthält, das den Dampf anhält, durch das Einfüllrohr auszuströmen, und die Lageerfassungseinrichtung (30) die Gegenwart von Wasser in der genannten Einfülleinrichtung (3) erfaßt, und der Steuerschaltung (25), die ausgebildet ist, die elektrische Versorgung zu den genannten rohrförmigen Heizelementen (51, 52) zu unterbrechen, so signalisiert, daß der Dampfdruck abnimmt und die Versorgung zu den genannten Elementen (51, 52) nach einer gewissen Zeitverzögerung wiederzuverbinden, wobei die Unterbrechung und Wiederverbindung in einer periodischen Abfolge auftritt.

3. Einrichtung gemäß Anspruch 2, **dadurch gekennzeichnet**, daß die genannte Erfassungseinrichtung (30) mit einem Eingang (110) einer Erfassungsschaltung (100) verbunden ist, die mit einem einen Kontakt schließenden Ausgang (u) versehen ist, der mit der Betätigungsspule eines Schaltschütz (Kr2) verbunden ist, der in Reaktion auf das Erfassen eines Signals von der genannten Einrichtung (30) die Verbindungseinrichtung (F, O) von dem genannten rohrförmigen Heizelement (52) unterbricht, und einer Einrichtung (R5, C4) in der genannten Erfassungsschaltung, um die Wiederverbindung der Verbindungseinrichtung (F, O) mit dem genannten rohrförmigen Heizelement (52) zu verzögern.

4. Einrichtung gemäß Anspruch 3, **dadurch gekennzeichnet**, daß die genannte Einrichtung zum Erfassen von Wasser eine Elektrode (31) ist, der eine Wechselspannung (Vac) zugeführt wird, und der Eingang (110) der Erfassungsschaltung (100) den elektrischen Strom in dem Wasser zwischen der Elektrode (31) und einem Rückführweg in dem Behälter (1) mißt.

## Revendications

1. Procédé de commande de la production de vapeur tout en empêchant la surchauffe dans un petit générateur de vapeur, comportant :
un dispositif de chauffage sous la forme d'éléments chauffants tubulaires (51, 52) dans un réservoir d'eau (1), qui peut être rempli au moyen d'un tube de remplissage externe (2), des moyens de détection (15, 16) destinés à détecter le niveau d'eau dans le réservoir d'eau entre un niveau maximum et un niveau minimum,
un circuit de commande (25), relié aux dits moyens de détection (15, 16) et aux dits éléments de chauffage (51, 52),
caractérisé en ce que,
la position de la surface supérieure de la colonne d'eau présente dans le tube de remplissage (2), ayant un tube étanche à l'eau (11), (2), est détectée à l'aide de moyens de détection de position (30), disposés dans des moyens de remplissage (3), reliés au tube de remplissage (2), le tube étanche à l'eau (11) étant partiellement courbé et étant disposé plus bas que l'entrée (10) du tube dans le réservoir et légèrement au-dessus du fond du réservoir de telle sorte qu'il contient de l'eau empêchant la vapeur de s'écouler par le tube de remplissage et que le niveau d'eau est détecté lorsque la colonne d'eau soulevée du fait de la pression de vapeur produite dans le réservoir (1) atteint lesdits moyens de détection de position (30), de sorte que le circuit de commande (25), en réponse à la détection de la surface supérieure du niveau d'eau dans le tube de remplissage (2), déconnecte l'alimentation électrique desdits éléments de chauffage tubulaires (51, 52) de telle sorte que la pression de vapeur diminue et, après un certain délai, l'alimentation dudit élément (51, 52) est reconnectée, la déconnexion et la reconnexion se produisant avec une séquence périodique.

2. Dispositif de commande de la production de vapeur tout en empêchant la surchauffe dans un petit générateur de vapeur, comportant :
un dispositif de chauffage sous la forme d'éléments chauffants tubulaires (51, 52) dans un réservoir d'eau (1), qui peut être rempli au moyen d'un tube de remplissage externe (2), des moyens de détection (15, 16) destinés à détecter le niveau d'eau dans le réservoir d'eau entre un niveau maximum et un niveau minimum,
des moyens de commande (25), reliés aux dits moyens de détection (15, 16) et aux dits éléments de chauffage (51, 52),
caractérisé en ce que,
des moyens de détection de position (30) sont prévus sur des moyens de remplissage (3), reliés au tube de remplissage (2), qui est prévu avec un tube étanche à l'eau (11), le tube étanche à l'eau (11) étant partiellement courbé et étant disposé plus bas que l'entrée (10) du tube dans le réservoir et légèrement au-dessus du fond du réservoir de telle sorte qu'il contient de l'eau empêchant la vapeur de s'écouler par le tube de remplissage et les moyens de détection de position (30) détectent la présence d'eau dans lesdits moyens de remplissage (3) et la signalent au circuit de commande (25) qui est prévu pour déconnecter l'alimentation électrique desdits éléments de chauffage tubulaires (51, 52) de telle sorte que la pression de vapeur diminue et, après un certain délai, l'alimentation dudit élément (51, 52) est reconnectée, la déconnexion et la reconnexion se produisant avec une séquence périodique

3. Dispositif selon la revendication 2,
caractérisé en ce que
lesdits moyens de détection (30) sont reliés à une entrée (110) d'un circuit de détection (100), qui est pourvu d'une sortie à fermeture de contact (u) reliée à la bobine de commande d'un contacteur (Kr2) qui, en réponse à la détection d'un signal provenant desdits moyens (30), déconnecte les moyens de connexion (F, O) dudit élément de chauffage tubulaire (52) et de moyens (R5, C4) dans ledit circuit de détection destinés à retarder la reconnexion des moyens de connexion (F, O) audit élément de chauffage tubulaire (52).

4. Dispositif selon la revendication 3,
caractérisé en ce que
lesdits moyens de détection d'eau sont constitués par une électrode (31) qui est alimentée avec une tension alternative (Vac) et l'entrée (110) du détecteur (100) mesure le courant électrique dans l'eau entre l'électrode (31) et un passage de retour dans le réservoir (1).
